# EUROPÄISCHE PATENTSCHRIFT

(11) **EP 3 879 434 B1**
(45) Veröffentlichungstag und Bekanntmachung des Hinweises auf die Patenterteilung: **09.11.2022**
(21) Anmeldenummer: 21161989.5
(22) Anmeldetag: 11.03.2021
(51) Int. Cl.: G06K 7/10, G06K 7/12

(54) **BILDERFASSUNGSSYSTEM ZUM ERFASSEN EINES OBJEKTS**
IMAGE ACQUISITION SYSTEM FOR DETECTING AN OBJECT
SYSTÈME DE DÉTECTION D'IMAGE PERMETTANT DE DÉTECTER UN OBJET

(30) Priorität: 11.03.2020 US 202016815555
(43) Veröffentlichungstag der Anmeldung: 15.09.2021
(73) Patentinhaber: VITRONIC Dr.-Ing. Stein Bildverarbeitungssysteme GmbH, 65189 Wiesbaden (DE)
(72) Erfinder: RAMSAUER, Jörg, 55218 Ingelheim (DE); SMOLORZ, Robert, 65527 Niedernhausen (DE); HOFFMANN, Burghard, 65232 Taunusstein (DE)
(74) Vertreter: Neumann Müller Oberwalleney Patentanwälte PartG mbB

(56) Entgegenhaltungen:
- EP-A1- 2 966 593
- WO-A1-2018/224107
- US-A1- 2008 297 780

## Beschreibung

Die Anmeldung betrifft ein Bilderfassungssystem zum Erfassen eines Objekts mittels optischer Sensoren. Ein Bilderfassungssystem zum Erfassen eines Objekts weist Lichtquellen zur Beleuchtung des Objekts und optische Sensoren auf, um beispielsweise Bilder von Objekten zu erfassen, die auf einem Fördersystem transportiert werden, oder um eine Codierung auf einem Objekt zu erfassen. In der Logistik werden Bilderfassungssysteme beispielsweise für Transport-, Umschlag- und Lagerprozesse verwendet, bei denen Objekte mit Fördermitteln bewegt werden.

Die US 2008/297780 A1 offenbart ein Bilderfassungssystem mit zwei Lichtquellen sowie zwei Sensoren, wobei die beiden Lichtquellen jeweils mit einem eigenen Filter ausgestattet sind als auch die beiden Sensoren jeweils über ein eigenes Filter verfügen, so dass eine Vielzahl von Filtern erforderlich ist.

In der EP 2 966 593 A1 ein Bilderfassungssystem zum Detektieren eines Objektes offenbart. Das Bilderfassungssystem umfasst einen definierten Erfassungsbereich, in dem das durch den Erfassungsbereich bewegte Objekt detektierbar ist, zumindest zwei Beleuchtungseinheiten zum Beleuchten des Erfassungsbereichs mit je einem Lichtstrahl, und zumindest zwei Lichtempfangseinheiten zum Empfangen von an dem Objekt reflektiertem Licht, wobei je eine Beleuchtungseinheit einer Lichtempfangseinheit zugeordnet ist, und wobei die Beleuchtungseinheiten jeweils ihren Lichtstrahl mit einer definierten Lichtwellenlänge aussenden und die Lichtempfangseinheiten ausgelegt sind, jeweilige ihnen zugeordnete definierte Lichtwellenlänge des reflektierten Lichts zu empfangen, wobei die eine Lichtempfangseinheit eine andere Lichtwellenlänge als die andere Lichtempfangseinheit empfängt.

Ein Nachteil besteht darin, dass ein auf dem Objekt aufgebrachter farbiger Aufdruck dann nicht gelesen werden kann, wenn die Farbe des Aufdrucks der der Lichtempfangseinheit zugeordneten Lichtwellenlänge entspricht.

Eine Aufgabe besteht darin, ein Bilderfassungssystem vorzustellen, das den Nachteil des Stands der Technik vermeidet.

Die Aufgabe wird gelöst durch ein Bilderfassungssystem zum Erfassen eines Objekts mit einer Vielzahl von Lichtquellen zur Beleuchtung des Objekts und mit einer Vielzahl von optischen Sensoren, wobei die Vielzahl von Lichtquellen eine Lichtstrahlung aussendet und wobei die Vielzahl von optischen Sensoren eingerichtet ist, eine von dem Objekt zurückgeworfene Lichtstrahlung zu detektieren. Eine erste Lichtquelle und eine zweite Lichtquelle der Vielzahl von Lichtquellen senden die Lichtstrahlung mit einer identischen Wellen-Eigenschaft aus. Weiterhin weist das Bilderfassungssystem einen ersten Filter auf, der eingerichtet ist, die Wellen-Eigenschaft zu beeinflussen, wobei der erste Filter derart angeordnet ist, dass die Lichtstrahlung zwischen der ersten Lichtquelle und dem Objekt auf den ersten Filter trifft und dass die zurückgeworfene Lichtstrahlung zwischen dem Objekt und einem ersten Sensor der Vielzahl von Sensoren auf den ersten Filter trifft. Weiterhin weist das Bilderfassungssystem einen zweiten Filter auf, der eingerichtet ist, die Wellen-Eigenschaft zu beeinflussen, wobei der zweite Filter derart angeordnet ist, dass die Lichtstrahlung zwischen der zweiten Lichtquelle und dem Objekt auf den zweiten Filter trifft und dass die Lichtstrahlung zwischen dem Objekt und einem zweiten Sensor der Vielzahl von Sensoren auf den zweiten Filter trifft, wobei der erste Filter die Wellen-Eigenschaft anders beeinflusst, als der zweite Filter.

In zumindest einer Ausgestaltung des Bilderfassungssystems ist eine dritte Lichtquelle der Vielzahl von Lichtquellen vorgesehen, welche die Lichtstrahlung mit der identischen Wellen-Eigenschaft aussendet, wie die erste Lichtquelle und die zweite Lichtquelle, wobei ein dritter Filter vorgesehen ist, der eingerichtet ist, die Wellen-Eigenschaft zu beeinflussen, wobei der dritte Filter derart angeordnet ist, dass die Lichtstrahlung zwischen der dritten Lichtquelle und dem Objekt auf den dritten Filter trifft und dass die zurückgeworfene Lichtstrahlung zwischen dem Objekt und einem dritten Sensor der Vielzahl von Sensoren auf den dritten Filter trifft und wobei der dritte Filter die Wellen-Eigenschaft anders beeinflusst, als der erste Filter und der zweite Filter.

In zumindest einer Ausgestaltung des Bilderfassungssystems ist die identische Wellen-Eigenschaft der Lichtstrahlung ein identischer Lichtquellen-Bandbereich von Lichtwellenlängen, wobei die Vielzahl von Lichtquellen die Lichtstrahlung mit dem identischen Lichtquellen-Bandbereich der Lichtwellenlängen aussendet. Die Vielzahl von Sensoren ist dazu eingerichtet, die zurückgeworfene Lichtstrahlung über den Lichtquellen-Bandbereich der Lichtwellenlängen zu detektieren, wobei der erste Filter die Wellen-Eigenschaft derart beeinflusst, dass der Lichtquellen-Bandbereich auf einen ersten Teil-Bandbereich der Lichtwellenlängen beschränkt ist und wobei der zweite Filter die Wellen-Eigenschaft derart beeinflusst, dass der Lichtquellen-Bandbereich auf einen zweiten Teil-Bandbereich der Lichtwellenlängen beschränkt ist. Beispielsweise unterscheidet sich der erste Teil-Bandbereich der Lichtwellenlängen von dem zweiten Teil-Bandbereich der Lichtwellenlängen, so dass eine Überbelichtung durch Überlagerung von sich kreuzenden Strahlengängen der Lichtwellen vermieden wird. Der Lichtquellen-Bandbereich der Lichtwellenlängen kann in den ersten Teil-Bandbereich und den zweiten Teil-Bandbereich aufgeteilt sein, um beispielsweise große Teil-Bandbereiche zur Verfügung zu stellen, gegebenenfalls um etwa gleich große Teil-Bandbereiche zur Verfügung zu stellen.

In zumindest einer Ausgestaltung des Bilderfassungssystems beeinflusst der dritte Filter die Wellen-Eigenschaft derart, dass der Lichtquellen-Bandbereich auf einen dritten Teil-Bandbereich der Lichtwellenlängen beschränkt ist, wobei der dritte Teil-Bandbereich der Lichtwellenlängen sich von dem ersten Teil-Bandbereich der Lichtwellenlängen und von dem zweiten Teil-Bandbereich der Lichtwellenlängen unterscheidet. Der Lichtquellen-Bandbereich der Lichtwellenlängen kann in den ersten Teil-Bandbereich, den zweiten Teil-Bandbereich und den dritten Teil-Bandbereich aufgeteilt sein, um beispielsweise große Teil-Bandbereiche zur Verfügung zu stellen, gegebenenfalls um etwa gleich große Teil-Bandbereiche zur Verfügung zu stellen.

In zumindest einer Ausgestaltung des Bilderfassungssystems ist eine Vielzahl von Spiegeln vorgesehen, welche ein Reflektieren der Lichtstrahlung erlauben und dadurch ein vorhandener Bauraum genutzt werden kann.

In zumindest einer Ausgestaltung des Bilderfassungssystems weist ein erster Spiegel der Vielzahl von Spiegeln den ersten Filter und ein zweiter Spiegel der Vielzahl von Spiegeln den zweiten Filter auf.

In zumindest einer Ausgestaltung des Bilderfassungssystems weist ein dritter Spiegel der Vielzahl von Spiegeln den dritten Filter auf.

In zumindest einer Ausgestaltung des Bilderfassungssystems sind der erste Filter und der zweite Filter jeweils als eine Filterscheibe vorgesehen.

In zumindest einer Ausgestaltung des Bilderfassungssystems ist die identische Wellen-Eigenschaft eine unregelmäßig ausgerichtete Transversalschwingung, wobei die erste

Lichtquelle und die zweite Lichtquelle die Lichtstrahlung mit der unregelmäßig ausgerichteten Transversalschwingung aussenden und wobei der erste Sensor und der zweite Sensor dazu eingerichtet sind, zurückgeworfene Lichtstrahlung mit einer beliebig ausgerichteten Transversalschwingung zu detektieren. Der erste Filter beeinflusst die Wellen-Eigenschaft derart, dass die Transversalschwingung auf eine erste Schwingungsrichtung beschränkt ist und der zweite Filter beeinflusst die Wellen-Eigenschaft derart, dass die Transversalschwingung auf eine zweite Schwingungsrichtung beschränkt ist, wobei die erste Schwingungsrichtung der Transversalschwingung sich von der zweiten Schwingungsrichtung der Transversalschwingung unterscheidet.

Weitere Anwendungsmöglichkeiten ergeben sich aus der hierin enthaltenen Beschreibung. Die nachfolgend beschriebenen Zeichnungen dienen nur zur Veranschaulichung ausgewählter Ausführungsformen und nicht aller möglichen Implementierungen und sollen den Umfang der vorliegenden Offenbarung nicht einschränken.

Es zeigen:
Figur 1 eine Ausführungsform eines Bilderfassungssystems zum Erfassen eines Objekts in einem Zustand, in dem das Objekt noch nicht erfasst wird;
Figur 2 die Ausführungsform des Bilderfassungssystems gemäß Figur 1 während das Objekt erfasst wird;
Figur 3 eine weitere Ausführungsform des Bilderfassungssystems während das Objekt erfasst wird;
Figur 4 eine weitere Ausführungsform des Bilderfassungssystems.

Entsprechende Bezugszeichen kennzeichnen entsprechende Bauteile in allen Ansichten der Zeichnungen. Beispielhafte Ausführungsformen werden nun anhand der beigefügten Zeichnungen näher beschrieben. Obwohl Begriffe wie erste, zweite, dritte usw. hierin zur Beschreibung verschiedener Elemente, Komponenten und/oder Abschnitte verwendet werden können, sollten diese durch die Begriffe nicht eingeschränkt werden.

Diese Begriffe dienen nur zur Unterscheidung der Elemente, Komponenten oder Abschnitte. Numerische Begriffe, die hierin verwendet werden, bedeuten keine Sequenz oder Reihenfolge, es sei denn, diese wird durch den Kontext eindeutig vorgegeben.

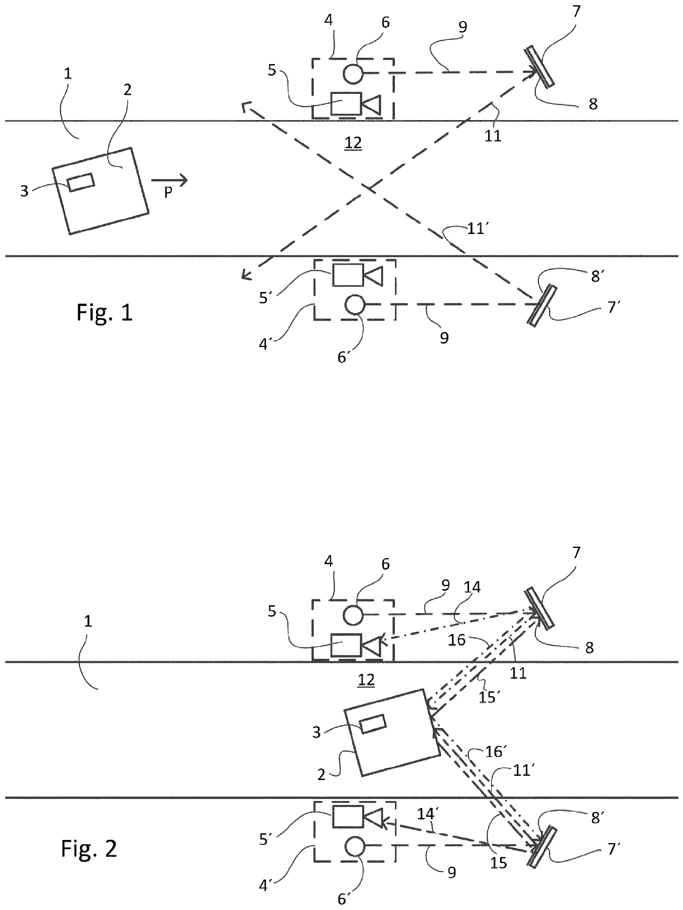

Die Figur 1 zeigt ein Bilderfassungssystem zum Erfassen eines Objekts 2. Das Objekt 2 kann, wie in dem Ausführungsbeispiel dargestellt, auf einer Fördervorrichtung 1 in Richtung des Pfeils P bewegt werden. Ziel des Erfassens des Objekts 2 kann sein, eine Codierung 3, beispielsweise einen Strichcode, an dem Objekt zu lesen. Die Codierung 3 kann sich auf einer beliebigen Seite des Objekts 2 befinden und es können mehrere Codierungen 3 auf verschiedenen Seiten des Objekts 2 angebracht sein, Das Objekt 2 wird auf dem Förderband 1 entlang des Bilderfassungssystems geführt. Auch wenn die Beschreibung der Ausführungsbeispiele sich auf ein einzelnes Objekt 2 bezieht, ist die Anwendung des Bilderfassungssystems nicht auf Stückgut beschränkt, sondern kann auch bei Transport-, Umschlag- und Lagerprozessen von Schüttgut eingesetzt werden.

Das Bilderfassungssystem weist eine Vielzahl von Lichtquellen 6, 6' zur Beleuchtung des Objekts 2 und eine Vielzahl von optischen Sensoren 5, 5' auf, wobei die Vielzahl von Lichtquellen 6, 6' eine Lichtstrahlung 9 aussendet. Es kann jeweils einer der optischen Sensoren 5, 5' mit einer der Lichtquellen 6, 6' zu einer Erfassungseinheit 4, 4' zusammengefasst sein. In dem Ausführungsbeispiel senden eine erste Lichtquelle 6 und eine zweite Lichtquelle 6' der Vielzahl von Lichtquellen 6, 6' die Lichtstrahlung 9 mit einer identischen Wellen-Eigenschaft aus. Als Wellen-Eigenschaft ist eine physikalische Eigenschaft der Lichtwellen zu verstehen. Die Lichtstrahlung 9 der Vielzahl von Lichtquellen 6, 6' ist hinsichtlich mindestens einer Wellen-Eigenschaft identisch. Es können auch mehrere oder sämtliche physikalische Eigenschaften der Lichtwellen der Lichtstrahlung 9 der Vielzahl von Lichtquellen 6, 6' identisch sein. Beispielsweise ist die Vielzahl von Lichtquellen 6, 6' identisch, wodurch das Bilderfassungssystem einen einfachen Aufbau erhält, da nur eine Art von Lichtquelle 6, 6' benötigt wird.

Das Bilderfassungssystem weist einen ersten Filter 8 auf, der eingerichtet ist, die Wellen-Eigenschaft zu beeinflussen, wobei der erste Filter 8 derart angeordnet ist, dass die Lichtstrahlung 9 zwischen der ersten Lichtquelle 6 und dem Objekt 2 auf den ersten Filter 8 trifft. Ein zweiter Filter 8' ist derart eingerichtet, dass die Wellen-Eigenschaft ebenfalls beeinflusst wird, wobei der zweite Filter 8' derart angeordnet ist, dass die Lichtstrahlung 9 zwischen der zweiten Lichtquelle 6' und dem Objekt 2 auf den zweiten Filter 8' trifft. Der erste Filter 8 beeinflusst die Wellen-Eigenschaft anders, als der zweite Filter 8', sodass eine erste beeinflusste Lichtstrahlung 11 hinter dem ersten Filter 8 sich bezüglich der Wellen-Eigenschaft von einer zweiten beeinflussten Lichtstrahlung 11' hinter dem zweiten Filter 8' unterscheidet. Ein Strahlengang der Lichtstrahlung 9 der ersten Lichtquelle 6 kreuzt einen Strahlengang der Lichtstrahlung 9 der zweiten Lichtquelle 6' hinter dem ersten Filter 8 und dem zweiten Filter 8' in einem Erfassungsbereich 12. Da die Lichtstrahlung 9 durch den ersten Filter 8 und den zweiten Filter 8' bezüglich der Wellen-Eigenschaft unterschiedlich beeinflusst wird, kommt es nicht zu einer Überlagerung der ersten beeinflussten Lichtstrahlung 11 und der zweiten beeinflussten Lichtstrahlung 11' in dem Erfassungsbereich 12.

In dem dargestellten Ausführungsbeispiel ist eine Vielzahl von Spiegeln 7, 7' vorgesehen, wobei in der dargestellten Variante ein erster Spiegel 7 der Vielzahl von Spiegeln den ersten Filter 8 aufweist und ein zweiter Spiegel 7' der Vielzahl von Spiegeln den zweiten Filter 8' aufweist. Die Lichtstrahlung 9 der Vielzahl von Lichtquellen 6, 6' wird durch die Vielzahl von Spiegeln 7, 7' reflektiert und dabei einerseits durch den ersten Filter 8 und andererseits durch den zweiten Filter 8' bezüglich der Wellen-Eigenschaft beeinflusst. Beispielsweise reflektiert die Vielzahl von Spiegel 7, 7' die Lichtstrahlung 9 in Richtung des Erfassungsbereichs 12.

Mit Bezug auf die Figur 2 wird nachfolgend eine Erfassung des Objekts 2 durch das Bilderfassungssystem beschrieben, wobei die Ausführungsform des Bilderfassungssystems identisch mit Figur 1 ist und nicht erneut in allen Einzelheiten beschrieben wird. Das Objekt 2 wird mit der Fördervorrichtung 1 in dem Erfassungsbereich 12 transportiert. Die Lichtstrahlung 9 der ersten Lichtquelle 6 wird durch den ersten Spiegel 7 in Richtung des Erfassungsbereichs 12 reflektiert und dabei durch den ersten Filter 8 bezüglich der Wellen-Eigenschaft beeinflusst, sodass die Lichtstrahlung 9 als erste beeinflusste Lichtstrahlung 11 auf das Objekt 2 trifft. Die Lichtstrahlung 9 der zweiten Lichtquelle 6' wird durch den zweiten Spiegel 7' in Richtung des Erfassungsbereichs 12 reflektiert und dabei durch den zweiten Filter 8' bezüglich der Wellen-Eigenschaft beeinflusst, sodass die Lichtstrahlung 9 als zweite beeinflusste Lichtstrahlung 11' auf das Objekt 2 trifft. An einer Oberfläche des Objekts 2 kommt es zu einer Remission, auch als diffuse Reflexion bezeichnet, der ersten beeinflussten Lichtstrahlung 11 und der zweiten beeinflussten Lichtstrahlung 11', welche nachfolgend allgemein als zurückgeworfene Lichtstrahlung bezeichnet wird. Von der gesamten zurückgeworfenen Lichtstrahlung werden nachfolgend nur diejenigen Anteile mit relevanten Strahlengängen beschrieben, Anteile, welche aufgrund der diffusen Reflexion nicht zu einem der optischen Sensoren 5, 5' gelangen können, werden nicht weiter beschrieben.

Die erste beeinflusste Lichtstrahlung 11 wird von dem Objekt 2 zurückgeworfen, wobei ein erster zurückgeworfener Anteil 16 der ersten beeinflussten Lichtstrahlung 11 zu dem ersten Spiegel 7 gelangt und ein zweiter zurückgeworfener Anteil 16' der ersten beeinflussten Lichtstrahlung 11 zu dem zweiten Spiegel 7' gelangt. Entsprechend wird die zweite beeinflusste Lichtstrahlung 11' von dem Objekt 2 zurückgeworfen, wobei ein erster zurückgeworfener Anteil 15' der zweiten beeinflussten Lichtstrahlung 11' zu dem ersten Spiegel 7 gelangt und ein zweiter zurückgeworfener Anteil 15 der zweiten beeinflussten Lichtstrahlung 11' zu dem zweiten Spiegel 7' gelangt. So trifft die zurückgeworfene Lichtstrahlung zwischen dem Objekt 2 und dem ersten Sensor 5 der Vielzahl von Sensoren 5, 5' auf den ersten Filter 8 und zwischen dem Objekt 2 und dem zweiten Sensor 5' der Vielzahl von Sensoren 5, 5' auf den zweiten Filter 8'.

Genauer treffen der erste zurückgeworfene Anteil 16 der ersten beeinflussten Lichtstrahlung 11 und der erste zurückgeworfene Anteil 15' der zweiten beeinflussten Lichtstrahlung 11' auf den ersten Filter 8, der eingerichtet ist, die Wellen-Eigenschaft zu beeinflussen. Der erste zurückgeworfene Anteil 16 der ersten beeinflussten Lichtstrahlung 11 weist dabei bereits die von dem ersten Filter 8 beeinflusste Wellen-Eigenschaft auf, so dass dieser den ersten Filter 8 im Wesentlichen unverändert passiert. Der erste zurückgeworfene Anteil 15' der zweiten beeinflussten Lichtstrahlung 11' hingegen weist die von dem ersten Filter 8 beeinflusste Wellen-Eigenschaft nicht auf, so dass dieser durch den ersten Filter 8 erneut in seiner Wellen-Eigenschaft beeinflusst wird. In praktischer Umsetzung wird je nach Art des verwendeten ersten Filters 8 der erste zurückgeworfene Anteil 15' der zweiten beeinflussten Lichtstrahlung 11' herausgefiltert und gelangt nicht zu dem ersten Sensor 5.

Entsprechend treffen der zweite zurückgeworfene Anteil 16' der ersten beeinflussten Lichtstrahlung 11 und der zweite zurückgeworfene Anteil 15 der zweiten beeinflussten Lichtstrahlung 11' auf den zweiten Filter 8', der eingerichtet ist, die Wellen-Eigenschaft zu beeinflussen. Der zweite zurückgeworfene Anteil 15 der zweiten beeinflussten Lichtstrahlung 11' weist dabei bereits die von dem zweiten Filter 8' beeinflusste Wellen-Eigenschaft auf, so dass dieser den zweiten Filter 8' im Wesentlichen unverändert passiert. Der zweite zurückgeworfene Anteil 16' der ersten beeinflussten Lichtstrahlung 11 hingegen weist die von dem zweiten Filter 8' beeinflusste Wellen-Eigenschaft nicht auf, so dass dieser durch den zweiten Filter 8' erneut in seiner Wellen-Eigenschaft beeinflusst wird. In praktischer Umsetzung wird je nach Art des verwendeten zweiten Filters 8' der zweite zurückgeworfene Anteil 16' der ersten beeinflussten Lichtstrahlung 11 herausgefiltert und gelangt nicht zu dem zweiten Sensor 5'.

Die Vielzahl von optischen Sensoren 5, 5' ist dazu eingerichtet, die von dem Objekt 2 zurückgeworfene Lichtstrahlung zu detektieren. Von der gesamten zurückgeworfenen Lichtstrahlung gelangt ein erster detektierter Anteil 14 zu dem ersten optischen Sensor 5 und ein zweiter detektierter Anteil 14' zu dem zweiten optischen Sensor 5'. Das Erfassen des Objekts 2 erfolgt anhand der von der Vielzahl von optischen Sensoren 5, 5' detektierten ersten und zweiten Anteile 14, 14' der zurückgeworfenen Lichtstrahlung. Durch die beschriebene Anordnung 'des ersten Filters 8 und des zweiten Filters 8' trifft die Lichtstrahlung 9 auf dem Weg zu dem Objekt 2 auf einen der Filter 8, 8'. Die zurückgeworfene Lichtstrahlung, genauer die zurückgeworfenen ersten und zweiten Anteile 15, 15', 16, 16' der ersten und zweiten beeinflussten Lichtstrahlung 11, 11' treffen auf dem Weg von dem Objekt 2 zu dem jeweiligen Sensor der Vielzahl von Sensoren 5, 5' erneut auf denselben ersten oder zweiten Filter 8, 8'. So wird eine Überbelichtung durch Überlagerung der sich kreuzenden Lichtstrahlung 9 aus verschiedenen der Vielzahl von Lichtquellen 6, 6' vermieden. Die Vielzahl von Sensoren 5, 5' unterscheidet sich gegebenenfalls nicht hinsichtlich der Wellen-Eigenschaft der zu detektierenden zurückgeworfenen Lichtstrahlung. Nach einem Aspekt sind alle Sensoren der Vielzahl von Sensoren 5, 5' identisch, wodurch das Bilderfassungssystem einen einfachen Aufbau erhält, da nur eine Art von Sensor 5, 5' benötigt wird.

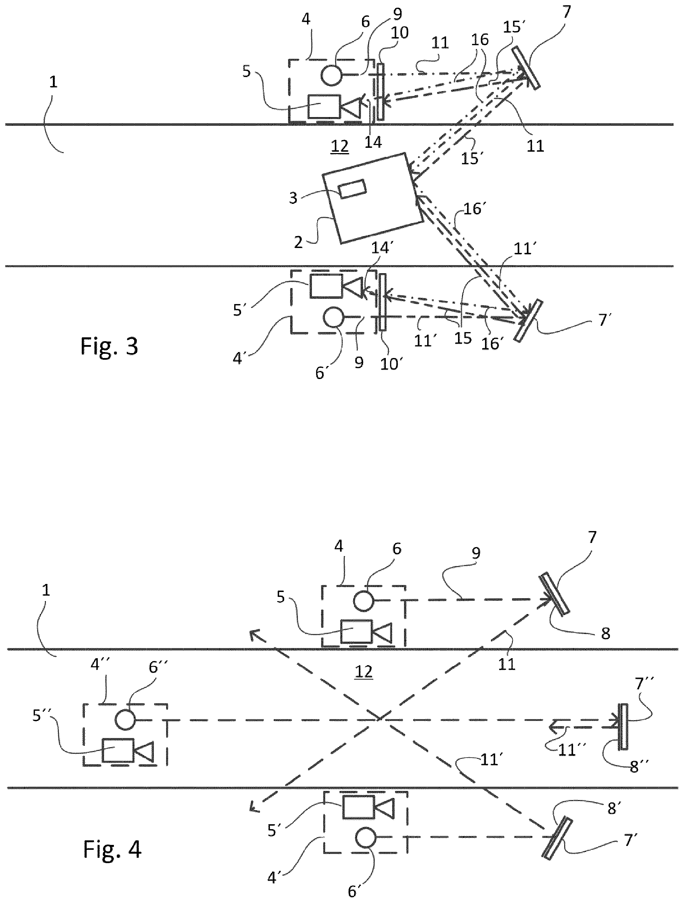

Mit Bezug auf die Figur 3 wird eine weitere Ausführungsform des Bilderfassungssystems beschrieben, welche während der Erfassung des Objekts 2 dargestellt ist. Die Ausführungsform unterscheidet sich in der Art und Anordnung der Vielzahl von Filtern 10, 10', welche hier als Filterscheiben ausgeführt sind.

Der erste Filter 10 ist dazu eingerichtet, die Wellen-Eigenschaft zu beeinflussen, wobei der erste Filter 10 derart angeordnet ist, dass die Lichtstrahlung 9 zwischen der ersten Lichtquelle 6 und dem Objekt 2 auf den ersten Filter 10 trifft und dass die zurückgeworfene Lichtstrahlung zwischen dem Objekt 2 und dem ersten Sensor 5 auf den ersten Filter 10 trifft. Der zweiten Filter 10' ist dazu eingerichtet, die Wellen-Eigenschaft zu beeinflussen, wobei der zweite Filter 10' derart angeordnet ist, dass die Lichtstrahlung 9 zwischen der zweiten Lichtquelle 6' und dem Objekt 2 auf den zweiten Filter 10' trifft und dass die zurückgeworfene Lichtstrahlung zwischen dem Objekt 2 und dem zweiten Sensor 5' auf den zweiten Filter 10' trifft. Der erste Filter 10 beeinflusst die Wellen-Eigenschaft anders als der zweite Filter 10'. Durch die beschriebene Anordnung der Vielzahl von Filtern 10, 10' trifft die Lichtstrahlung 9 auf dem Weg zu dem Objekt 2 auf einen Filter der Vielzahl von Filtern 10, 10'. Die zurückgeworfene Lichtstrahlung trifft auf dem Weg von dem Objekt 2 zu dem jeweiligen Sensor der Vielzahl von Sensoren 5, 5' erneut auf denselben Filter 10, 10'. So wird eine Überbelichtung durch Überlagerung der sich kreuzenden Lichtstrahlung 9 aus verschiedenen der Vielzahl von Lichtquellen 6, 6' vermieden. Die Vielzahl von Sensoren 5, 5' unterscheidet sich gegebenenfalls nicht hinsichtlich der Wellen-Eigenschaft der zu detektierenden zurückgeworfenen Lichtstrahlung. Nach einem Aspekt sind alle Sensoren der Vielzahl von Sensoren 5, 5' identisch, wodurch das Bilderfassungssystem einen einfachen Aufbau erhalten kann, da nur eine Art von Sensor 5, 5' benötigt wird.

Mit Bezug auf die Figur 3 wird nachfolgend die Erfassung des Objekts 2 durch das Bilderfassungssystem beschrieben, wobei gleiche Bauteile dieselben Bezugszeichen aufweisen, wie in den Figuren 1 und 2 und nicht erneut in allen Einzelheiten beschrieben werden. Die Lichtstrahlung 9 der ersten Lichtquelle 6 wird durch den ersten Filter 10 bezüglich der Wellen-Eigenschaft beeinflusst, sodass die Lichtstrahlung 9 als erste beeinflusste Lichtstrahlung 11 auf das Objekt 2 trifft. Die Lichtstrahlung 9 der zweiten Lichtquelle 6' wird durch den zweiten Filter 10' bezüglich der Wellen-Eigenschaft beeinflusst, sodass die Lichtstrahlung 9 als zweite beeinflusste Lichtstrahlung 11' auf das Objekt 2 trifft. Die erste beeinflusste Lichtstrahlung 11 und die zweite beeinflusste Lichtstrahlung 11' werden diffus von dem Objekt 2 zurückgeworfen. Der erste zurückgeworfene Anteil 16 der ersten beeinflussten Lichtstrahlung 11 und der erste zurückgeworfene Anteil 15' der zweiten beeinflussten Lichtstrahlung 11' treffen auf den ersten Filter 10, der eingerichtet ist, die Wellen-Eigenschaft zu beeinflussen. Der erste zurückgeworfene Anteil 16 der ersten beeinflussten Lichtstrahlung 11 weist dabei bereits die von dem ersten Filter 10 beeinflusste Wellen-Eigenschaft auf, so dass dieser den ersten Filter 10 im Wesentlichen unverändert passiert. Der erste zurückgeworfene Anteil 15' der zweiten beeinflussten Lichtstrahlung 11' hingegen weist die von dem ersten Filter 10 beeinflusste Wellen-Eigenschaft nicht auf, so dass dieser durch den ersten Filter 10 erneut in seiner Wellen-Eigenschaft beeinflusst wird. In praktischer Umsetzung wird je nach Art des verwendeten ersten Filters 10 der erste zurückgeworfene Anteil 15' der zweiten beeinflussten Lichtstrahlung 11' herausgefiltert und gelangt nicht zu dem ersten Sensor 5. Der zweite zurückgeworfene Anteil 16' der ersten beeinflussten Lichtstrahlung 11 und der zweite zurückgeworfene Anteil 15 der zweiten beeinflussten Lichtstrahlung 11' treffen auf den zweiten Filter 10', der eingerichtet ist, die Wellen-Eigenschaft zu beeinflussen. Der zweite zurückgeworfene Anteil 15 der zweiten beeinflussten Lichtstrahlung 11' weist dabei bereits die von dem zweiten Filter 10' beeinflusste Wellen-Eigenschaft auf, so dass dieser den zweiten Filter 10' im Wesentlichen unverändert passiert. Der zweite zurückgeworfene Anteil 16' der ersten beeinflussten Lichtstrahlung 11 hingegen weist die von dem zweiten Filter 10' beeinflusste Wellen-Eigenschaft nicht auf, so dass dieser durch den zweiten Filter 10' erneut in seiner Wellen-Eigenschaft beeinflusst wird. In praktischer Umsetzung wird je nach Art des verwendeten zweiten Filters 10' der zweite zurückgeworfene Anteil 16' der ersten beeinflussten Lichtstrahlung 11 herausgefiltert und gelangt nicht zu dem zweiten Sensor 5'.

Optional kann auch hier, wie dargestellt, die Lichtstrahlung 9 über den ersten Spiegel 7 und über den zweiten Spiegel 7' in Richtung des Erfassungsbereichs 12 reflektiert werden, auch wenn die Funktion der Filter 10, 10' hier unabhängig von der Vielzahl von Spiegeln 7, 7' ist. Die Spiegelung der Lichtstrahlung 9 und auch der zurückgeworfenen Lichtstrahlung, genauer der zurückgeworfenen ersten und zweiten Anteile 15, 15', 16, 16' der ersten und zweiten beeinflussten Lichtstrahlung 11, 11', erlaubt es beispielsweise, die empfindlichen und teuren Bauteile des Erfassungssystems, wie beispielsweise die Vielzahl von Lichtquellen 6, 6' und die Vielzahl von Sensoren 5, 5', in einem Bereich anzuordnen, in dem diese Bauteile vor Beschädigung durch Bedienpersonal oder das Objekt 2 und vor Verschmutzung geschützt sind. In dem Ausführungsbeispiel besteht ein Aspekt darin, auch die als Filterscheiben ausgeführten Filter 10, 10' unmittelbar an den Erfassungseinheiten 4, 4' anzuordnen. Als Erfassungseinheit 4, 4' ist eine Zuordnung jeweils einer der Lichtquellen 6, 6' zu einem der Sensoren 5, 5' zu verstehen. Gegebenenfalls ist jeder der Lichtquellen 6, 6' genau einer der Sensoren 5, 5' zugeordnet. Die Erfassungseinheiten 4, 4' weisen beispielsweise jeweils ein gemeinsames Gehäuse für eine der Lichtquellen 6, 6' und einen der Sensoren 5, 5' auf. Die Erfassungseinheiten 4, 4' sind beispielsweise oberhalb und unterhalb der Fördervorrichtung angeordnet, alternativ oder zusätzlich auch seitlich davon.

Mit Bezug auf die Figur 4 wird eine weitere Ausführungsform des Erfassungssystems beschrieben, welche sich hinsichtlich einer Anzahl der Lichtquellen und der Sensoren von der Ausführungsform gemäß Figur 1 unterscheidet. Es wird nachfolgend auf die zusätzlichen Merkmale eingegangen, ohne dass die aus der Figur 1 bekannten Merkmale erneut ausführlich beschrieben werden. Das Erfassungssystem ist nicht beschränkt auf eine Anordnung von zwei Lichtquellen 6, 6' mit zwei Sensoren 5, 5'. Stattdessen sind mehr Lichtquellen und Sensoren denkbar, deren Lichtstrahlen 9 sich kreuzen, beispielsweise drei, vier, fünf oder mehr, je nach Notwendigkeit für die Erfassung und verfügbarem Bauraum. Nachfolgend wird beispielhaft das Ausführungsbeispiel mit drei Lichtquellen 6, 6', 6" und drei Sensoren 5, 5', 5" beschrieben. Das Bilderfassungssystem weist eine zusätzliche dritte Lichtquelle 6" der Vielzahl von Lichtquellen auf, welche die Lichtstrahlung 9 mit der identischen Wellen-Eigenschaft aussendet, wie die erste Lichtquelle 6 und die zweite Lichtquelle 6". Die dritte Lichtquelle 6" ist beispielsweise oberhalb der Fördervorrichtung 1 angeordnet. Ein Strahlengang der Lichtstrahlung 9 der dritten Lichtquelle 6" kreuzt mindestens einen der Strahlengänge der Lichtstrahlung 9 der ersten Lichtquelle 6 und der zweiten Lichtquelle 6'. Ein dritter Filter 8" ist dazu eingerichtet, die Wellen-Eigenschaft zu beeinflussen, wobei der dritte Filter 8" derart angeordnet ist, dass die Lichtstrahlung 9 zwischen der dritten Lichtquelle 6" und dem Erfassungsbereich 12 auf den dritten Filter 8" trifft. Die zurückgeworfene Lichtstrahlung ist hier nicht gezeigt, da kein Objekt erfasst wird, jedoch wird in nachvollziehbarer Weise auch diese auf dem Weg zu dem dritten Sensor 5" erneut auf den dritten Filter 8" treffen. Der dritte Filter 8" beeinflusst die Wellen-Eigenschaft anders, als der erste Filter 8 und der zweite Filter 8'. In dem dargestellten Ausführungsbeispiel ist die Vielzahl von Spiegeln 7, 7', 7" vorgesehen, wobei hier beispielsweise der erste Spiegel 7 den ersten Filter 8 aufweist, der zweite Spiegel 7' den zweiten Filter 8' aufweist und ein dritter Spiegel 7" den dritten Filter 8" aufweist. Die Lichtstrahlung 9 der Vielzahl von Lichtquellen 6, 6', 6" wird durch die Vielzahl von Spiegeln 7, 7', 7" reflektiert und dabei durch 'den jeweiligen ersten Filter 8, zweiten Filter 8', oder dritten Filter 8" bezüglich der Wellen-Eigenschaft beeinflusst. Beispielsweise reflektiert die Vielzahl von Spiegeln 7, 7', 7" die Lichtstrahlung 9 in Richtung des Erfassungsbereichs 12. Auf die Strahlengänge während der Erfassung wird hier nicht näher eingegangen, da diese sich aus den zuvor beschriebenen Ausführungsformen ergeben können.

Das Bilderfassungssystem wird nachfolgend mit Bezug auf die vorstehend beschriebenen Ausführungsbeispiele hinsichtlich des Aspekts der Wellen-Eigenschaft der Lichtstrahlung näher erläutert.

Gemäß eines Aspekts betrifft die identische Wellen-Eigenschaft der Lichtstrahlung 9 einen identischen Lichtquellen-Bandbereich von Lichtwellenlängen. Die Vielzahl von Lichtquellen 6, 6', 6" sendet die Lichtstrahlung 9 mit diesem identischen Lichtquellen-Bandbereich der Lichtwellenlängen aus. Der Lichtquellenbandbereich liegt in einem oder mehreren der Spektren der ultravioletten Strahlung, des sichtbaren Lichts und der Infrarotstrahlung. Die Lichtquellen 6, 6', 6" emittieren beispielsweise jeweils weißes Licht. Die Vielzahl von Sensoren 5, 5', 5" ist beispielsweise dazu eingerichtet, die zurückgeworfene Lichtstrahlung über den gesamten Lichtquellen-Bandbereich der Lichtwellenlängen zu detektieren. Der erste Filter 8 beeinflusst die Wellen-Eigenschaft derart, dass der Lichtquellen-Bandbereich auf einen ersten Teil-Bandbereich der Lichtwellenlängen beschränkt ist, wobei der zweite Filter 8'die Wellen-Eigenschaft derart beeinflusst, dass der Lichtquellen-Bandbereich auf einen zweiten Teil-Bandbereich der Lichtwellenlängen beschränkt ist, wobei der erste Teil-Bandbereich der Lichtwellenlängen sich von dem zweiten Teil-Bandbereich der Lichtwellenlängen unterscheidet. Gegebenenfalls kann der gesamte Lichtquellen-Bandbereich der Lichtwellenlängen in den ersten Teil-Bandbereich und den zweiten Teil-Bandbereich aufgeteilt sein. Bei der Ausführungsform gemäß Figur 4 beeinflusst der dritte Filter 8" die Wellen-Eigenschaft derart, dass der Lichtquellen-Bandbereich auf einen dritten Teil-Bandbereich der Lichtwellenlängen beschränkt ist, wobei der dritte Teil-Bandbereich der Lichtwellenlängen sich von dem ersten Teil-Bandbereich der Lichtwellenlängen und von dem zweiten Teil-Bandbereich der Lichtwellenlängen unterscheidet. Beispielsweise ist der Lichtquellen-Bandbereich der Lichtwellenlängen in den ersten Teil-Bandbereich, den zweiten Teil-Bandbereich und den dritten Teil-Bandbereich aufgeteilt. Eine Anzahl von Teil-Bandbereichen entspricht dabei beispielsweise einer Anzahl der Lichtquellen 6, 6', 6", deren Strahlengänge sich kreuzen. Die Teil-Bandbereiche können derart gewählt sein, dass diese sich beispielsweise nicht gegenseitig überlappen, um eine Überbelichtung durch Überlagerung der Lichtstrahlung zu vermeiden. Die Teil-Bandbereiche decken den gesamten Lichtquellen-Bandbereich der Lichtstrahlung ab, wodurch beispielsweise breite Teil-Bandbereiche ermöglicht werden, die beispielsweise nicht auf eine einzelne Lichtfarbe beschränkt sind, sondern sich über mehrere Lichtfarben erstrecken. Dies kann beispielsweise bei der Erfassung farbiger Codierungen auf dem Objekt 2 eingesetzt werden, welche einen Teil des Lichtspektrums absorbieren. Ein auf das absorbierte Lichtspektrum beschränkte Teil-Bandbreite kann eine Erfassung erschweren oder unmöglich machen, wenn z. B. eine rote Codierung mit rotem Licht erfasst wird

Als Sensoren 5, 5', 5" können Kameras vorgesehen sein, beispielsweise Zeilenkameras. Matrixkameras können ebenfalls verwendet werden. Die Spiegel 7, 7', 7"mit den Filtern 8, 8', 8" weisen beispielsweise optische Filter als Beschichtung auf, gegebenenfalls als Folie, die auf die Spiegel 7, 7', 7" aufgeklebt ist oder als aufgedampfte Beschichtung. Es können alternativ auch ein oder mehrere Filter 10, 10' als Filterscheiben anstelle eines oder mehrerer der Filter 8, 8', 8" als Beschichtung für den ersten Filter 8, 10, den zweiten Filter 8', 10' und gegebenenfalls den dritten Filter 8' vorgesehen sein, wie beispielsweise in dem Ausführungsbeispiel gemäß Figur 3. Als erste, zweite und dritte Filter 8, 8', 8", 10, 10' werden beispielsweise Spektralfilter verwendet, wobei die Bandbereiche der Lichtwellenlängen der Spektralfilter gegeneinander verschobene Kammfilter aufweisen. Dadurch ist der erste Teil-Bandbereich der Lichtwellenlängen gegenüber dem zweiten Teil-Bandbereich der Lichtwellenlängen und gegebenenfalls gegenüber dem dritten Teil-Bandbereich der Lichtwellenlängen verschoben. Alternativ besteht die Möglichkeit, einen optischen Hochpassfilter und/oder einen optischen Tiefpassfilter zu verwenden. Zum Beispiel lässt der erste Filter 8, 10 als Hochpassfilter sichtbares gelbes bis dunkelrotes Licht durch und der zweite Filter 8', 10' als Tiefpassfilter sichtbares blaues bis grünes Licht.

Ein weiterer Aspekt ist in jeder der zuvor beschriebenen Ausführungsformen realisierbar und wird nachfolgend mit Bezug auf die Ausführungsformen gemäß Figuren 1 und 2 gemeinsam beschrieben. Nach diesem Aspekt ist die Wellen-Eigenschaft eine Ausrichtung der Transversalschwingung der Lichtwelle. Dabei betrifft die identische Wellen-Eigenschaft der Lichtstrahlung 9 eine unregelmäßig ausgerichtete Transversalschwingung, wobei die Vielzahl von Lichtquellen 6, 6' die Lichtstrahlung 9 mit der unregelmäßig ausgerichteten Transversalschwingung aussenden, also ohne Polarisation. Die Vielzahl von Sensoren 5, 5' ist dazu eingerichtet, die zurückgeworfene Lichtstrahlung mit einer beliebig ausgerichteten Transversalschwingung zu detektieren. Der erste Filter 8, 10 beeinflusst die Wellen-Eigenschaft derart, dass die Transversalschwingung auf eine erste Schwingungsrichtung beschränkt ist, wobei der zweite Filter 8', 10' die Wellen-Eigenschaft derart beeinflusst, dass die Transversalschwingung auf eine zweite Schwingungsrichtung beschränkt ist, wobei die erste Schwingungsrichtung der Transversalschwingung sich von der zweiten Schwingungsrichtung der Transversalschwingung unterscheidet. Auch wenn die zurückgeworfene Lichtstrahlung durch die diffuse Reflexion an dem Objekt 2 die beeinflusste Wellen-Eigenschaft, also die erste Schwingungsrichtung oder die zweite Schwingungsrichtung, teilweise wieder verliert, wird dennoch die Überbelichtung verringert. Beispielsweise sind der erste Filter 8, 10 und der zweite Filter 8', 10' als Polarisationsfilter ausgeführt, wobei die Lichtstrahlung 9 und die zurückgeworfene Lichtstrahlung in der Wellen-Eigenschaft derart beeinflusst werden, dass die erste Schwingungsrichtung der Transversalschwingung um 90 Grad gegenüber der zweiten Schwingungsrichtung der Transversalschwingung verdreht ist.

### Bezugszeichenliste

- 1: Fördervorrichtung
- 2: Objekt
- 3: Code, Codierung
- 4, 4': Erfassungseinheiten
- 5, 5', 5": Sensoren, Vielzahl von Sensoren
- 5: Erster Sensor
- 5': Zweiter Sensor
- 5": Dritter Sensor
- 6, 6', 6": Lichtquellen, Vielzahl von Lichtquellen
- 6: Erste Lichtquelle
- 6': Zweite Lichtquelle
- 6": Dritte Lichtquelle
- 7, 7', 7": Spiegel, Vielzahl von Spiegeln
- 7: Erster Spiegel
- 7': Zweiter Spiegel
- 7": Dritter Spiegel
- 8, 8', 8": Filter, insbesondere als Beschichtung der Spiegel
- 8: Erster Filter
- 8': Zweiter Filter
- 8": Dritter Filter
- 9: Lichtstrahlung der Lichtquellen
- 10, 10': Filter, insbesondere als Filterscheibe
- 10: Erster Filter
- 10': Zweiter Filter
- 11,: Erste beeinflusste Lichtstrahlung
- 11': Zweite beeinflusste Lichtstrahlung
- 12: Erfassungsbereich
- 14: Erster detektierter Anteil der Lichtstrahlung
- 14': Zweiter detektierter Anteil der Lichtstrahlung
- 15 ': Erster zurückgeworfener Anteil der zweiten beeinflussten Lichtstrahlung
- 15: Zweiter zurückgeworfener Anteil der zweiten beeinflussten Lichtstrahlung
- 16: Erster zurückgeworfener Anteil der ersten beeinflussten Lichtstrahlung
- 16': Zweiter zurückgeworfener Anteil der ersten beeinflussten Lichtstrahlung
- P: Pfeil, Förderrichtung

## Patentansprüche

1. Bilderfassungssystem zum Erfassen eines Objekts,
mit einer Vielzahl von Lichtquellen (6, 6', 6") zur Beleuchtung des Objekts (2) und mit einer Vielzahl von optischen Sensoren (5, 5', 5"), wobei die Vielzahl von Lichtquellen eine Lichtstrahlung (9) aussendet und wobei die Vielzahl von optischen Sensoren eingerichtet ist, eine von dem Objekt zurückgeworfene Lichtstrahlung zu detektieren;
wobei eine erste Lichtquelle (6) und eine zweite Lichtquelle (6') der Vielzahl von Lichtquellen die Lichtstrahlung mit einer identischen Wellen-Eigenschaft aussenden;
mit einem ersten Filter (8, 10), der eingerichtet ist, die Wellen-Eigenschaft zu beeinflussen, wobei der erste Filter derart angeordnet ist, dass die Lichtstrahlung zwischen der ersten Lichtquelle und dem Objekt auf den ersten Filter trifft und dass die zurückgeworfene Lichtstrahlung zwischen dem Objekt und einem ersten Sensor (5) der Vielzahl von Sensoren auf den ersten Filter trifft, und
mit einem zweiten Filter (8', 10'), der eingerichtet ist, die Wellen-Eigenschaft zu beeinflussen, wobei der zweite Filter derart angeordnet ist, dass die Lichtstrahlung zwischen der zweiten Lichtquelle und dem Objekt auf den zweiten Filter trifft und dass die Lichtstrahlung zwischen dem Objekt und einem zweiten Sensor (5') der Vielzahl von Sensoren auf den zweiten Filter trifft,
wobei der erste Filter die Wellen-Eigenschaft anders beeinflusst, als der zweite Filter.

2. Bilderfassungssystem nach Anspruch 1, **dadurch gekennzeichnet,**
**dass** eine dritte Lichtquelle (6") der Vielzahl von Lichtquellen die Lichtstrahlung mit der identischen Wellen-Eigenschaft aussendet, wie die erste Lichtquelle (6) und die zweite Lichtquelle (6');
mit einem dritten Filter (8"), der eingerichtet ist, die Wellen-Eigenschaft zu beeinflussen, wobei der dritte Filter derart angeordnet ist, dass die Lichtstrahlung zwischen der dritten Lichtquelle und dem Objekt auf den dritten Filter trifft und dass die zurückgeworfene Lichtstrahlung zwischen dem Objekt und einem dritten Sensor (5") der Vielzahl von Sensoren auf den dritten Filter trifft;
wobei der dritte Filter die Wellen-Eigenschaft anders beeinflusst, als der erste Filter und der zweite Filter.

3. Bilderfassungssystem nach einem der Ansprüche 1 oder 2, **dadurch gekennzeichnet,**
**dass** die identische Wellen-Eigenschaft der Lichtstrahlung ein identischer Lichtquellen-Bandbereich von Lichtwellenlängen ist, und wobei die Vielzahl von Lichtquellen (6, 6', 6") die Lichtstrahlung (9) mit dem identischen Lichtquellen-Bandbereich der Lichtwellenlängen aussenden;
wobei die Vielzahl von Sensoren (5, 5', 5") dazu eingerichtet sind, die zurückgeworfene Lichtstrahlung über den Lichtquellen-Bandbereich der Lichtwellenlängen zu detektieren;
wobei der erste Filter (8, 10) die Wellen-Eigenschaft derart beeinflusst, dass der Lichtquellen-Bandbereich auf einen ersten Teil-Bandbereich der Lichtwellenlängen beschränkt ist; und
wobei der zweite Filter (8', 10') die Wellen-Eigenschaft derart beeinflusst, dass der Lichtquellen-Bandbereich auf einen zweiten Teil-Bandbereich der Lichtwellenlängen beschränkt ist;
wobei der erste Teil-Bandbereich der Lichtwellenlängen sich von dem zweiten Teil-Bandbereich der Lichtwellenlängen unterscheidet.

4. Bilderfassungssystem nach Anspruch 3, **dadurch gekennzeichnet,**
**dass** der Lichtquellen-Bandbereich der Lichtwellenlängen in den ersten Teil-Bandbereich und den zweiten Teil-Bandbereich aufgeteilt ist.

5. Bilderfassungssystem nach einem der Ansprüche 3 oder 4, **dadurch gekennzeichnet,**
**dass** ein dritter Filter (8") die Wellen-Eigenschaft derart beeinflusst, dass der Lichtquellen-Bandbereich auf einen dritten Teil-Bandbereich der Lichtwellenlängen beschränkt ist;
wobei der dritte Teil-Bandbereich der Lichtwellenlängen sich von dem ersten Teil-Bandbereich der Lichtwellenlängen und von dem zweiten Teil-Bandbereich der Lichtwellenlängen unterscheidet; und
wobei der Lichtquellen-Bandbereich der Lichtwellenlängen in den ersten Teil-Bandbereich, den zweiten Teil-Bandbereich und den dritten Teil-Bandbereich aufgeteilt ist.

6. Bilderfassungssystem nach einem der Ansprüche 3 bis 5, **dadurch gekennzeichnet,**
**dass** eine Anzahl von Teil-Bandbereichen einer Anzahl der Lichtquellen (6, 6', 6") entspricht, deren Strahlengänge sich kreuzen.

7. Bilderfassungssystem nach einem der Ansprüche 1 bis 6, **dadurch gekennzeichnet,**
**dass** eine Vielzahl von Spiegeln (7, 7', 7") vorgesehen ist.

8. Bilderfassungssystem nach Anspruch 7, **dadurch gekennzeichnet,**
**dass** ein erster Spiegel (7) der Vielzahl von Spiegeln den ersten Filter (8) aufweist und ein zweiter Spiegel (7') der Vielzahl von Spiegeln den zweiten Filter (8') aufweist.

9. Bilderfassungssystem nach Anspruch 8, **dadurch gekennzeichnet,**
**dass** ein dritter Spiegel (7") der Vielzahl von Spiegeln den dritten Filter (8") aufweist.

10. Bilderfassungssystem nach einem der Ansprüche 1 bis 7, **dadurch gekennzeichnet,**
**dass** der erste Filter (10) und der zweite Filter (10') jeweils als eine Filterscheibe vorgesehen sind.

11. Bilderfassungssystem nach einem der Ansprüche 1 bis 10, **dadurch gekennzeichnet,**
**dass** ein dritter Filter als Filterscheibe vorgesehen ist.

12. Bilderfassungssystem nach einem der Ansprüche 1 bis 11, **dadurch gekennzeichnet,**
**dass** jeder Lichtquelle ein Sensor zugeordnet ist.

13. Bilderfassungssystem nach einem der Ansprüche 1 bis 12, **dadurch gekennzeichnet,**
**dass** der erste Filter und der zweite Filter eingerichtet sind, um als Spektralfilter zu wirken.

14. Bilderfassungssystem nach einem der Ansprüche 1 bis 12, **dadurch gekennzeichnet,**
**dass** der erste Filter und der zweite Filter eingerichtet sind, um als Kammfilter zu wirken, wobei der erste Teil-Bandbereich der Lichtwellenlängen des ersten Filters gegenüber dem zweiten Teil-Bandbereich der Lichtwellenlängen des zweiten Filters verschoben ist.

15. Bilderfassungssystem nach einem der Ansprüche 1 bis 12, **dadurch gekennzeichnet,**
**dass** der erste Filter eingerichtet ist, um als optischer Hochpassfilter zu wirken und der zweite Filter eingerichtet ist, um als optischer Tiefpassfilter zu wirken.

## Claims

1. Imaging system for capturing an object,
with a plurality of light sources (6, 6', 6") for illuminating the object and with a plurality of optical sensors (5, 5', 5"), wherein the plurality of light sources emit a light radiation (9), and wherein the plurality of optical sensors are adapted to detect a light radiation reflected from the object;
wherein a first light source (6) and a second light source (6') of the plurality of light sources emit the light radiation with an identical wave characteristic;
with a first filter (8, 10), which is adapted to influence the wave characteristic, the first filter being arranged such that the light radiation between the first light source and the object falls on the first filter and that the reflected light radiation between the object and a first sensor (5) of the plurality of sensors falls on the first filter, and
with a second filter (8', 10'), which is adapted to influence the wave characteristic, wherein the second filter is arranged such that the light radiation between the second light source and the object falls on the second filter and that the reflected light radiation between the object and a second sensor (5') of the plurality of sensors falls on the second filter,
wherein the first filter influences the wave characteristic differently than the second filter.

2. Imaging system according to claim 1, **characterised in**
**that** a third light source (6") of the plurality of light sources emits the light radiation with the identical wave characteristic as the first light source (6) and the second light source (6');
with a third filter (8"), which is adapted to influence the wave characteristic, wherein the third filter is arranged such that the light radiation between the third light source and the object falls on the third filter and that the reflected light radiation between the object and a third sensor (5") of the plurality of sensors falls on the third filter;
wherein the third filter influences the wave characteristic differently than the first filter and the second filter.

3. Imaging system according to any one of claims 1 and 2, **characterised in**
**that** the identical wave characteristic of the light radiation is an identical light source band range of light wavelengths, and wherein the plurality of light sources (6, 6', 6") emit the light radiation (9) with the identical light source band range of light wavelengths;
wherein the plurality of sensors (5, 5', 5") are adapted to detect the reflected light radiation over the light source band range of light wavelengths;
wherein the first filter (8, 10) influences the wave characteristic such that the light source band range is limited to a first sub-band range of the light wavelengths; and
wherein the second filter (8', 10') influences the wave characteristic such that the light source band range is limited to a second sub-band range of the light wavelengths;
wherein the first sub-band range of the light wavelengths is different from the second sub-band range of the light wavelengths.

4. Imaging system according to claim 3, wherein the light source band range of light wavelengths is divided into the first sub-band range and the second sub-band range.

5. Imaging system according to any one of claims 3 or 4, **characterised in**
**that** a third filter (8") influences the wave characteristic such that the light source band range is limited to a third sub-band range of light wavelengths;
wherein the third sub-band range of light wavelengths is different from the first sub-band range of light wavelengths and from the second sub-band range of light wavelengths; and
wherein the light source band range of light wavelengths is divided into the first sub-band range, the second sub-band range and the third sub-band range.

6. Imaging system according to any one of claims 3 to 5, **characterised in**
**that** a count of sub-band ranges corresponds to a count of light sources (6, 6', 6") with intersecting light paths.

7. Imaging system according to any one of claims 1 to 6, **characterised in**
**that** a plurality of mirrors (7, 7', 7") is provided.

8. Imaging system according to claim 7, **characterised in**
**that** a first mirror (7) of the plurality of mirrors comprises the first filter (8) and a second mirror (7') of the plurality of mirrors comprises the second filter (8').

9. Imaging system according to claim 8, **characterised in**
**that** a third mirror (7") of the plurality of mirrors comprises the third filter (8").

10. Imaging system according to any one of claims 1 to 7, **characterised in**
**that** the first filter (10) and the second filter (10') are each provided as a filter disk.

11. Imaging system according to any one of claims 1 to 10, **characterised in**
**that** a third filter is provided as a filter disk.

12. Imaging system according to any one of claims 1 to 11, **characterised in**
**that** one Sensor is assigned to each light source.

13. Imaging system according to any one of claims 1 to 12, **characterised in**
**that** the first filter and the second filter are provided as spectral filters.

14. Imaging system according to any one of claims 1 to 12, **characterised in**
**that** the first filter and the second filter are provided as comb filters, wherein the first sub-band range of light wavelengths of the first filter is shifted with respect to the second sub-band range of light wavelengths of the second filter.

15. Imaging system according to any one of claims 1 to 12, **characterised in**
**that** the first filter is provided as an optical high-pass filter and the second filter is provided as an optical low-pass filter.

## Revendications

1. Système détecteur d'images, destiné à détecter un objet,
pourvu d'une pluralité de sources lumineuses (6, 6', 6"), permettant d'éclairer l'objet (2) et pourvu d'une pluralité de capteurs optiques (5, 5', 5"), la pluralité de sources lumineuses émettant un rayonnement lumineux (9) et la pluralité de capteurs optiques étant aménagée pour détecter un rayonnement lumineux rejeté par l'objet ;
une première source lumineuse (6) et une deuxième source lumineuse (6') parmi la pluralité de sources lumineuses émettant le rayonnement lumineux avec une propriété d'onde identique ;
pourvu d'un premier filtre (8, 10), qui est aménagé pour influencer la propriété d'onde, le premier filtre étant placé de telle sorte que le rayonnement lumineux entre la première source lumineuse et l'objet soit incident sur le premier filtre et que le rayonnement lumineux rejeté entre l'objet et un premier capteur (5) parmi la pluralité de capteurs soit incident sur le premier filtre, et
pourvu d'un deuxième filtre (8', 10'), qui est aménagé pour influencer la propriété d'onde, le deuxième filtre étant placé de telle sorte que le rayonnement lumineux entre la deuxième source lumineuse et l'objet soit incident sur le deuxième filtre et que le rayonnement lumineux entre l'objet et un deuxième capteur (5') parmi la pluralité de capteurs soit incident sur le deuxième filtre,
le premier filtre influençant la propriété d'onde de manière différente de celle du deuxième filtre.

2. Système détecteur d'images selon la revendication 1, **caractérisé**
**en ce qu'**une troisième source lumineuse (6") parmi la pluralité de sources lumineuses émet le rayonnement lumineux avec la propriété d'onde identique à celle de la première source lumineuse (6) et de la deuxième source lumineuse (6') ;
pourvu d'un troisième filtre (8"), qui est aménagé pour influencer la propriété d'onde, le troisième filtre étant placé de telle sorte que le rayonnement lumineux entre la troisième source lumineuse et l'objet soit incident sur le troisième filtre et que le rayonnement lumineux entre l'objet et un troisième capteur (5") parmi la pluralité de capteurs soit incident sur le troisième filtre ;
le troisième filtre influençant la propriété d'onde de manière différente de celle du premier filtre et du deuxième filtre.

3. Système détecteur d'images selon l'une quelconque des revendications 1 ou 2, **caractérisé**
**en ce que** la propriété d'onde identique du rayonnement lumineux est une bande identique de sources lumineuses de longueurs d'onde de lumière, et la pluralité de sources lumineuses (6, 6', 6") émettant le rayonnement lumineux (9) avec la bande identique de sources lumineuses des longueurs d'onde de lumière ;
la pluralité de capteurs (5, 5', 5") étant aménagée pour détecter le rayonnement lumineux sur la bande de sources lumineuses des longueurs d'onde de lumière ;
le premier filtre (8, 10) influençant la propriété d'onde de telle sorte que la bande de sources lumineuses soit restreinte à une première bande partielle des longueurs d'onde ; et
le deuxième filtre (8', 10') influençant la propriété d'onde de telle sorte que la bande de sources lumineuses soit restreinte à une deuxième bande partielle des longueurs d'onde ;
la première bande partielle des longueurs d'onde de lumière se différenciant de la deuxième bande partielle des longueurs d'onde de lumière.

4. Système détecteur d'images selon la revendication 3, **caractérisé**
**en ce que** la bande de sources lumineuses des longueurs d'onde de lumière est répartie en la première bande partielle et en la deuxième bande partielle.

5. Système détecteur d'images selon l'une quelconque des revendications 3 ou 4, **caractérisé,**
**en ce qu'**un troisième filtre (8") influence la propriété d'onde de telle sorte que la bande de sources lumineuses soit restreinte à une troisième bande partielle des longueurs d'onde ;
la troisième bande partielle des longueurs d'onde de lumière se distinguant de la première bande partielle des longueurs d'onde de lumière et de la deuxième bande partielle des longueurs d'onde de lumière ; et
la bande des sources lumineuses des longueurs d'onde de lumière étant répartie en la première bande partielle, en la deuxième bande partielle et en la troisième bande partielle.

6. Système détecteur d'images selon l'une quelconque des revendications 3 à 5, **caractérisé**
**en ce qu'**un nombre de bandes partielles correspond à un nombre des sources lumineuses (6, 6', 6") dont les faisceaux lumineux se croisent.

7. Système détecteur d'images selon l'une quelconque des revendications 1 à 6, **caractérisé**
**en ce qu'**il est prévu une pluralité de miroirs (7, 7', 7").

8. Système détecteur d'images selon la revendication 7, **caractérisé**
**en ce qu'**un premier miroir (7) parmi la pluralité de miroirs comporte le premier filtre (8) et un deuxième miroir (7') parmi la pluralité de miroirs comporte le deuxième filtre (8').

9. Système détecteur d'images selon la revendication 8, **caractérisé**
**en ce qu'**un troisième miroir (7") parmi la pluralité de miroirs comporte le troisième filtre (8").

10. Système détecteur d'images selon l'une quelconque des revendications 1 à 7, **caractérisé**
**en ce que** le premier filtre (10) et le deuxième filtre (10') sont prévus chacun sous la forme d'un disque filtrant.

11. Système détecteur d'images selon l'une quelconque des revendications 1 à 10, **caractérisé**
**en ce qu'**un troisième filtre est prévu sous la forme d'un disque filtrant.

12. Système détecteur d'images selon l'une quelconque des revendications 1 à 11, **caractérisé**
**en ce qu'**à chaque source lumineuse est associé un capteur.

13. Système détecteur d'images selon l'une quelconque des revendications 1 à 12, **caractérisé**
**en ce que** le premier filtre et le deuxième filtre sont aménagés pour agir en tant que filtre spectral.

14. Système détecteur d'images selon l'une quelconque des revendications 1 à 12, **caractérisé**
**en ce que** le premier filtre et le deuxième filtre sont aménagés pour agir en tant que filtres en peigne, la première bande partielle des longueurs d'onde de lumière du premier filtre étant décalée par rapport à la deuxième bande partielle des longueurs d'onde de lumière du deuxième filtre.

15. Système détecteur d'images selon l'une quelconque des revendications 1 à 12, **caractérisé**
**en ce que** le premier filtre est aménagé pour agir en tant que filtre optique passe-haut et en ce que le deuxième filtre est aménagé pour agir en tant que filtre optique passe-bas.
